# EUROPEAN PATENT SPECIFICATION

(11) **EP 1 476 267 B1**
(45) Date of publication and mention of the grant of the patent: **22.06.2011**
(21) Application number: 03705615.7
(22) Date of filing: 20.02.2003
(51) Int. Cl.: B23B 29/24

(54) **CUTTING TOOL AND HOLDER**
SCHNEIDWERKZEUG UND HALTER
OUTIL DE COUPE ET SUPPORT

(30) Priority: 22.02.2002 SE 0200560
(43) Date of publication of application: 17.11.2004
(73) Proprietor: Seco Tools AB, 737 82 Fagersta (SE)
(72) Inventor: RYDBERG, Christer, S-753 34 Uppsala (SE)
(74) Representative: Taquist, Henrik Lennart Emanuel
(86) International application number: PCT/SE2003/000281
(87) International publication number: WO 2003/070405

(56) References cited:
- EP-A1- 1 166 930
- DE-A1- 3 733 298
- DE-A1- 19 857 841
- US-A- 4 640 159
- US-A- 6 132 146

## Description

### The field of the invention

The present invention relates to a cutting tool and a holder in accordance with the preambles of the independent claims.

### Background of the invention

All numerical controlled lathes are equipped with different tools for the various machining operations and require either that a new tool is indexed forwardly in the tool revolver or is collected from a tool magazine connected to the lathe. The time for tool change varies greatly depending on the size of the machine, but lies as rule between 1 and 10 seconds. At output of complicated details with short times of machining and at high number of revolutions many tools are used and the unproductive time of the machine becomes long. For some jobs values of more than 50 % is mentioned regarding unproductive time.

The development has brought about the provision of a milling spindle to the modern NC lath in the x direction but which in principle can move freely in the working area and to reach the work piece from all directions in machines with multifunctions with a so called B spindle. The problem lies nowadays in that tools are not optimized for use in the new machines.

GB-A-2122124 shows a cutting tool provided with a shank connected to a head. The head carries three axially directed cutting edges, which are indexed to active position as the preceding cutting edge becomes worn out.

US 6132146 shows a tool where all cutting inserts are used simultaneously in one and the same machining operation. EP 1166930 discloses in examples of a tool having four cutting inserts, wherein turning inserts are used during milling. DE 3733298 discloses a tool having two cutting inserts.

### Objects of the invention

One object of the present invention is to provide a cutting tool and a holder for metal machining that overcome the above-captioned drawbacks.

One object of the present invention is to provide a cutting tool that can substitute a number of conventional tools.

Still another object of the present invention is to provide a stable holder.

### Short description of the drawing

These objects and advantages of the invention will be evident from the following detailed description of preferred embodiments of a cutting tool and a holder according to the present invention in connection with the appended figures, wherein:

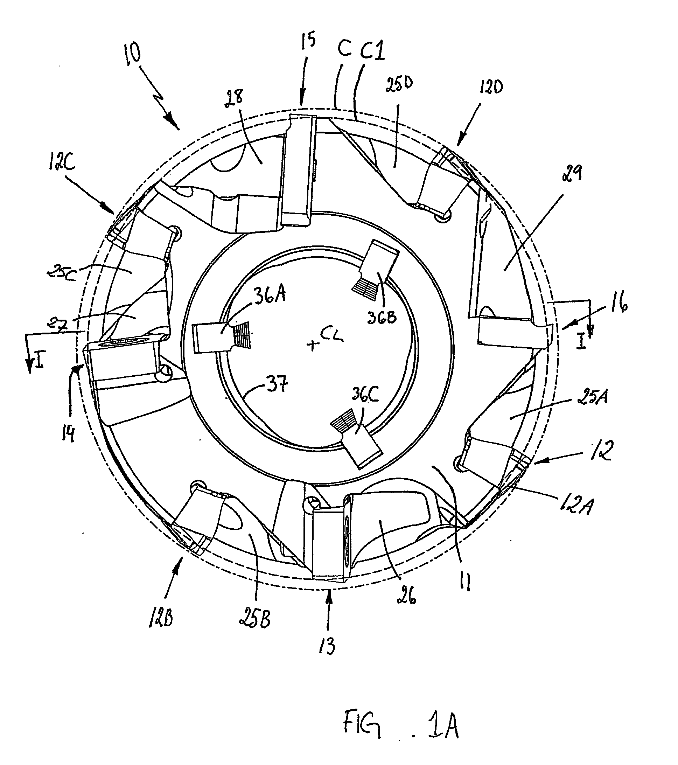

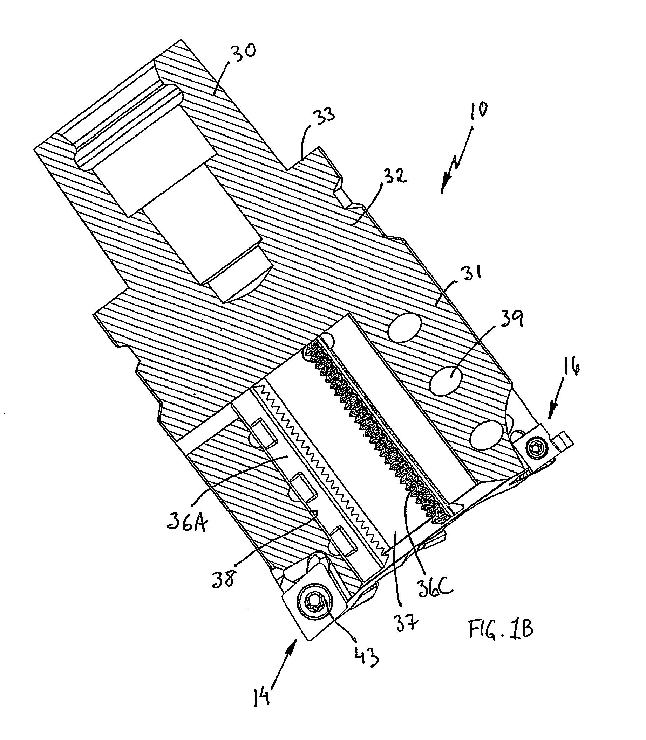

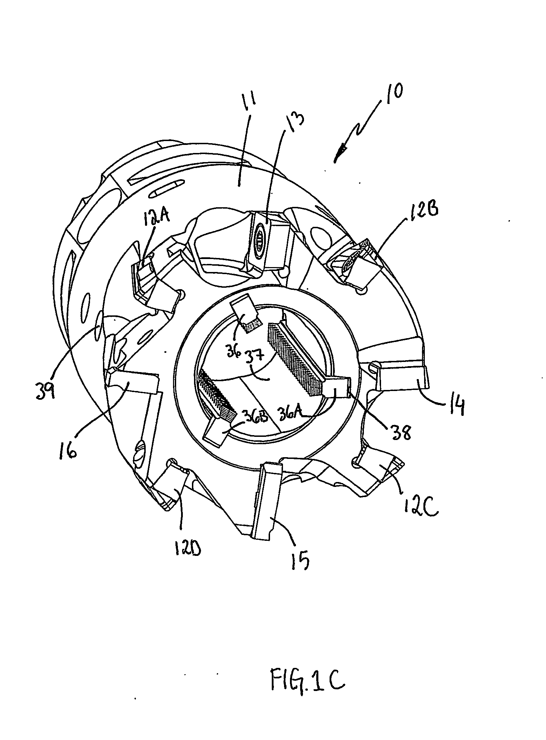

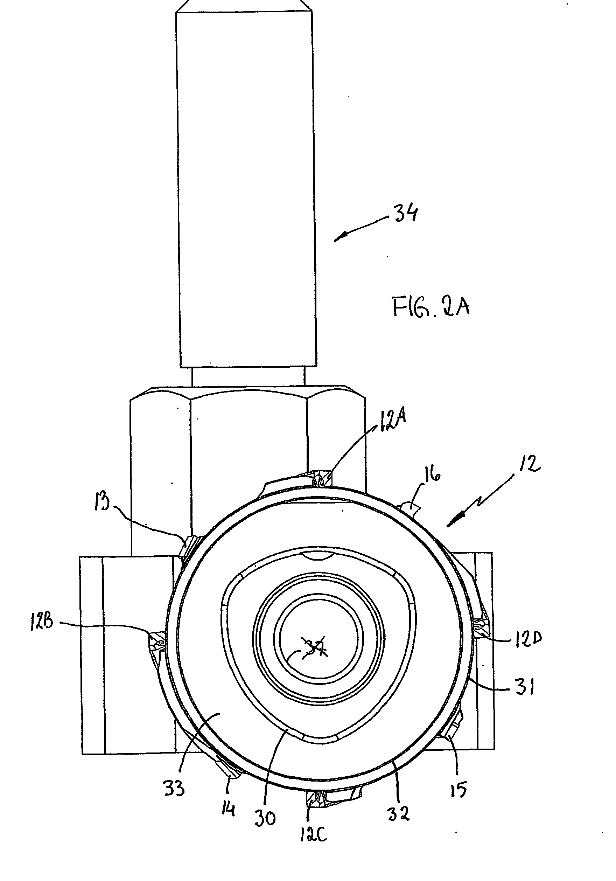

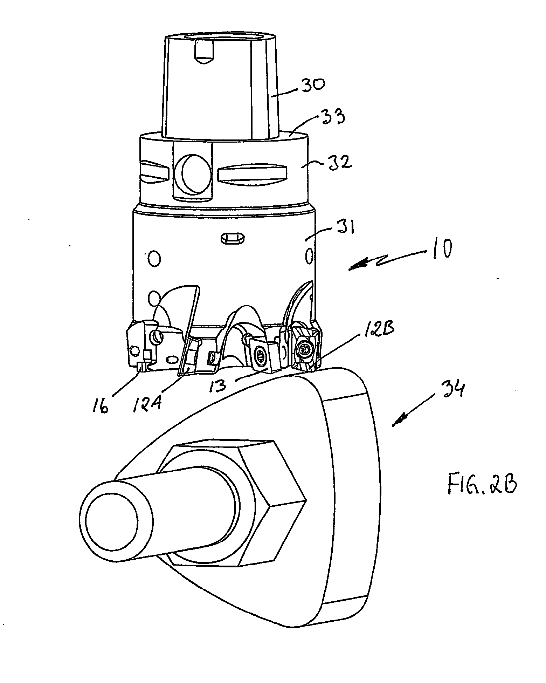

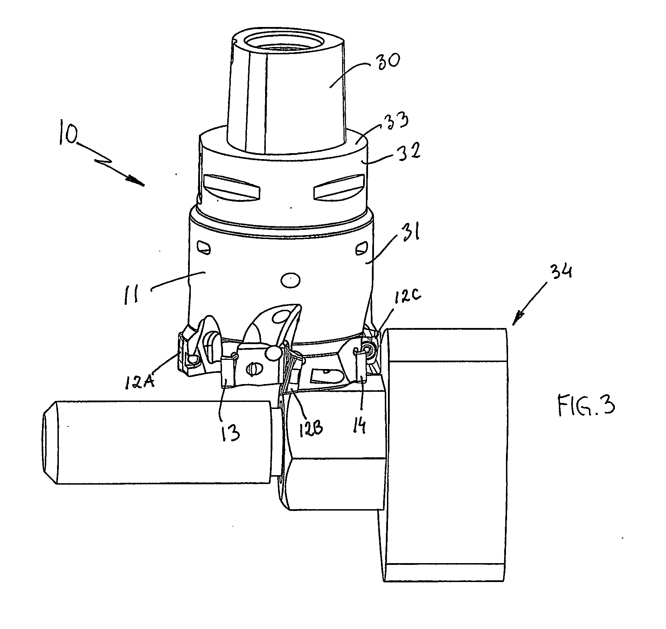

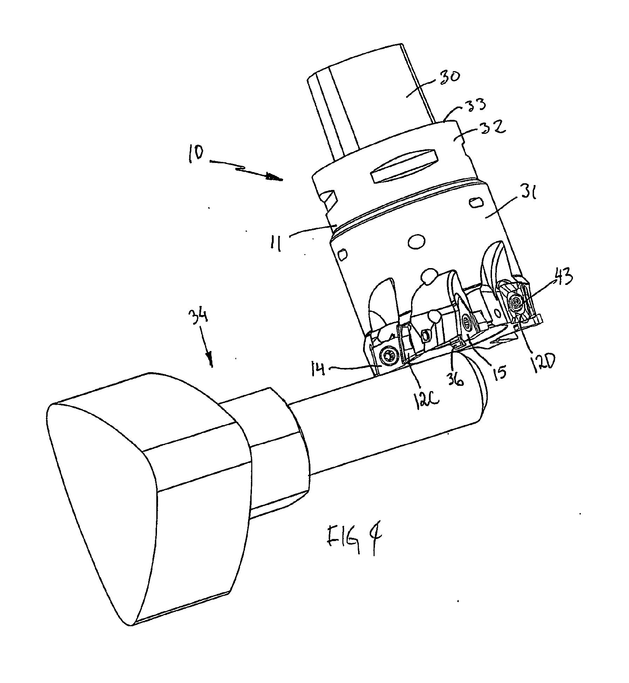

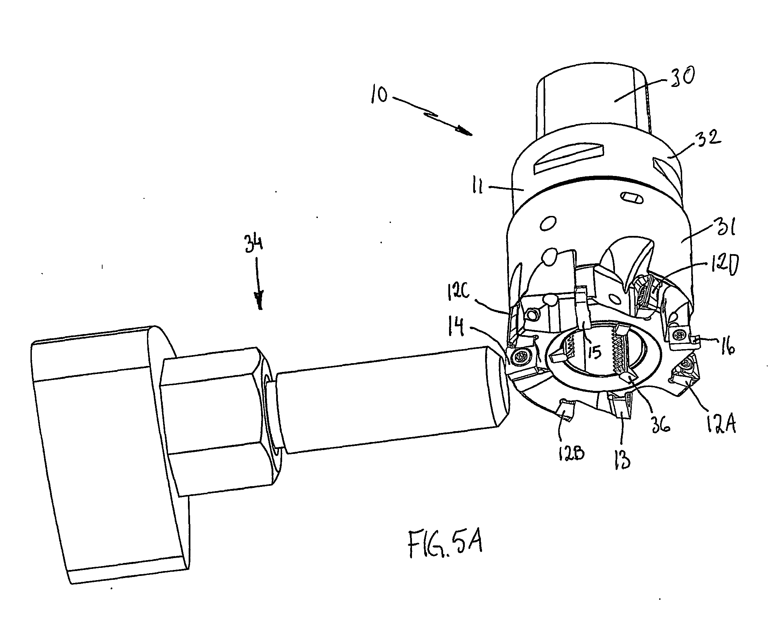

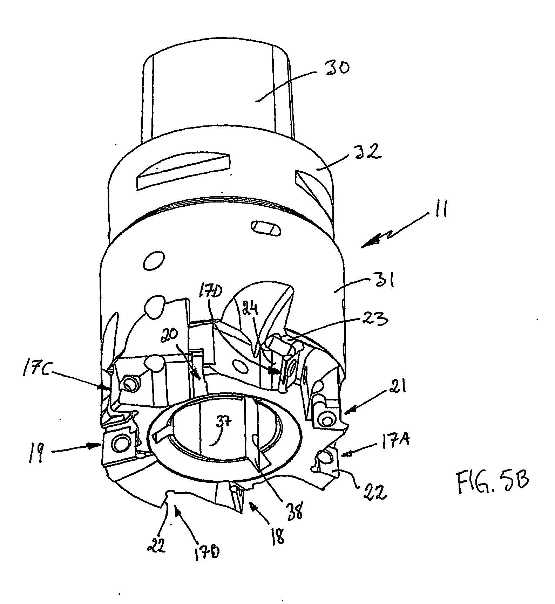

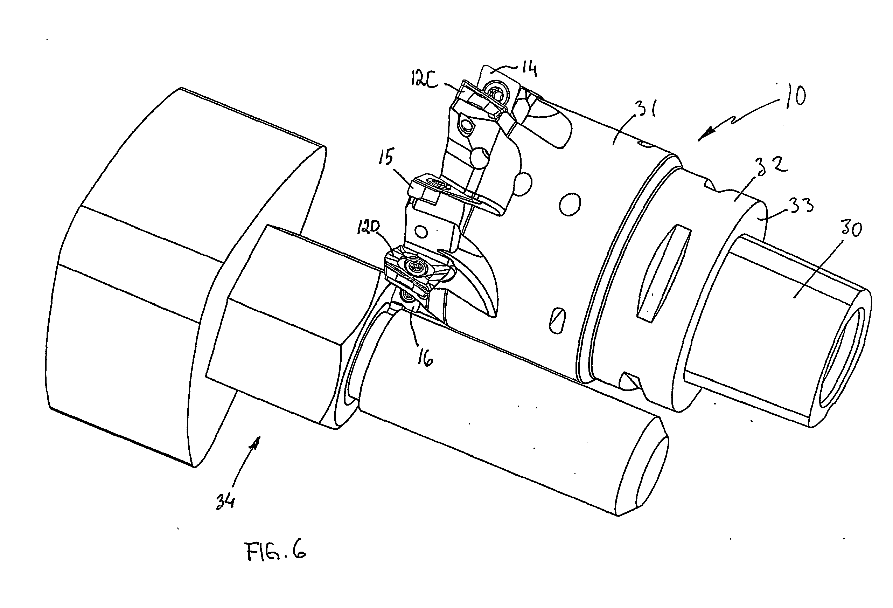

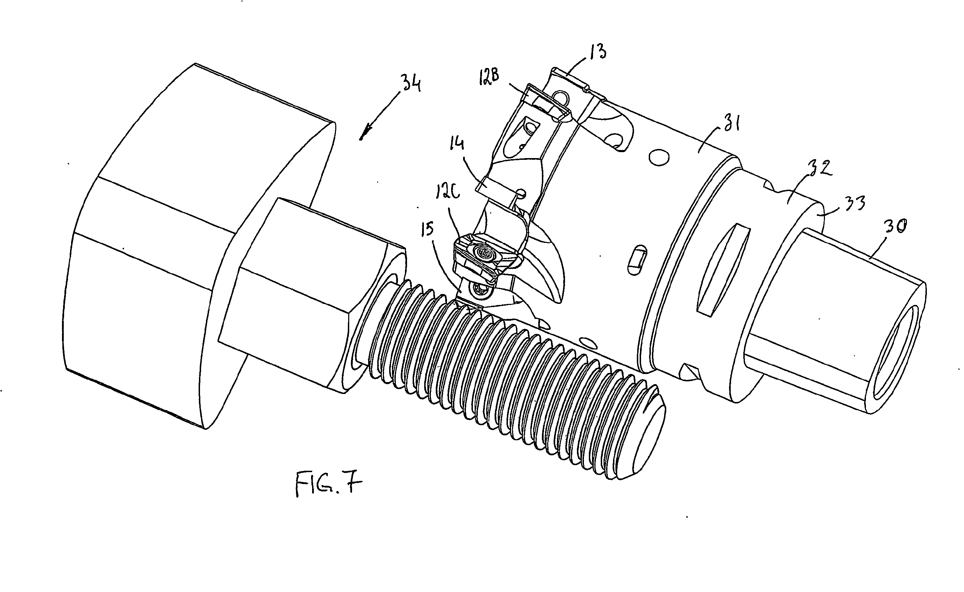

Fig. 1A shows an embodiment of a cutting tool according to the present invention, in a bottom view. Fig. 1B shows the cutting tool in a cross-section according to the line I-I in Fig. 1A. Fig. 1C shows the cutting tool in a perspective view. Figs. 2A-2C show the cutting tool in a top view, in a perspective view and in a side view, respectively, at round milling of a work piece. Fig. 3 shows the cutting tool in a perspective view at corner milling of the work piece. Fig. 4 shows the cutting tool in a side view during longitudinal turning of the work piece. Fig. 5A shows the cutting tool in a perspective view during facing of the work piece. Fig. 5B shows a holder according to the present invention in the same perspective view as in Fig. 5A. Fig. 6 shows the cutting tool in a perspective view during grooving of the work piece. Fig. 7 shows the cutting tool in a perspective view during threading of the work piece.

### Detailed description of preferred embodiments of the invention

In Figs. 1A-7 is shown a cutting tool 10 according to the present invention developed in the basic shape of a milling tool. The cutting tool 10 comprises a rigid tool body or holder 11, preferably of steel, and a number of cutting inserts 12, 13, 14, 15, 16 and 36, preferably of sintered cemented carbide. The tool body 11 comprises a number of insert pockets 17, 18, 19, 20, 21 and 38 in order to receive the cutting inserts 12-16 and 36. Each cutting insert pocket 17-21 and 38 is adapted to a geometry of a cutting insert and comprises a primarily planar base surface 22 and at least one shoulder 23, 24 (Fig. 5B). The cutting inserts 12-16 and 36 in the cutting tool 10 such as illustrated in Figs. 1-7 are intended for milling (the cutting insets 12A-12D), turning (the cutting inserts 13 and 14), threading (the cutting insert 15), grooving (the cutting insert 16) and thread milling (the cutting inserts 36, 36A, 36B). The object of the cutting tool 10 in a modern machine is to be able to machine a work piece 34 substantially in one set up to get a finished component. It is also possible to connect drilling edges to an alternative cutting tool or to provide other cutting edges around a central hole 37 in the cutting tool for external machining of rods.

The shoulder or the shoulders 23, 24 are intended to abut against an edge surface or against each edge surface of the cutting insert. A through-going, preferably threaded, boring is provided in the holder in order to receive a fastening screw 33 in order to fix the cutting insert in the holder 11 in a known manner. Alternatively, one or more cutting inserts can be mounted on one or more cassettes which are fixed to the holder.

The holder 11 consequently comprises a number of first insert pockets 17A, 17B, 17C and 17D in order to receive four first milling insert 12A, 12B, 12C respective 12D. The insert pockets are provided in the holder 11 such that their most peripheral parts in relation to the center axis CL of the holder substantially lies at a circle C1 (Fig. 1). The circle C1 constitutes the biggest or efficient diameter of the holder 11. The holder 11 furthermore comprises at least one second insert pocket 18-21 and 38 provided to keep second cutting insert for other machining than the first cutting inserts, said second insert pocket 18-21 and 38 is provided radially inside of the circle C1. The number of first insert pockets 17A-17D for the milling inserts 12A-12A are preferably between 4 and 10 pieces. A chip space 25A, 25B, 25C, 25D is provided in connection with each cutting insert pocket for the milling insert 12. The second insert pockets 18-21 are each intended to keep one turning insert 13-16. A chip space 26, 27, 28 and 29 is provided in connection with each cutting insert pocket for the turning insert 18-21. At least one of the first insert pockets 17 and one of the second insert pockets connect to a common chip space 25C and 27 in the holder, that is, chips cut by the cutting insert 12C during milling and by the cutting insert 14 during turning is using the same accommodation for removal from the machining area, however not at the same occasion.

The holder 11 comprises a fastening means with a shank 30 which connects to a head 31 via an intermediate portion 32. The intermediate portion has a planar end surface 33 in the central part of which the shank 30 projects. The shank is of triangular shape and the feature of the fastening means is more closely described in US-A- 4.834.597, US-A-4.934.883 and US-A-5,026,224, which hereby is incorporated in the present description. The fastening means is also known as "Coromant Capto®". The shank 30 has an axial length L1 and the intermediate portion 32 and the head 31 excluding cutting inserts have the length L2. The length L2 relates to the length L1 preferably within the interval 1.5 - 3 in order to obtain a very rigid tool, which is a prerequisite for obtaining exact tolerances especially at turning. The fastening means may alternatively be of another type such as a cylindrical shank, an ISO cone, a Morse cone or similar.

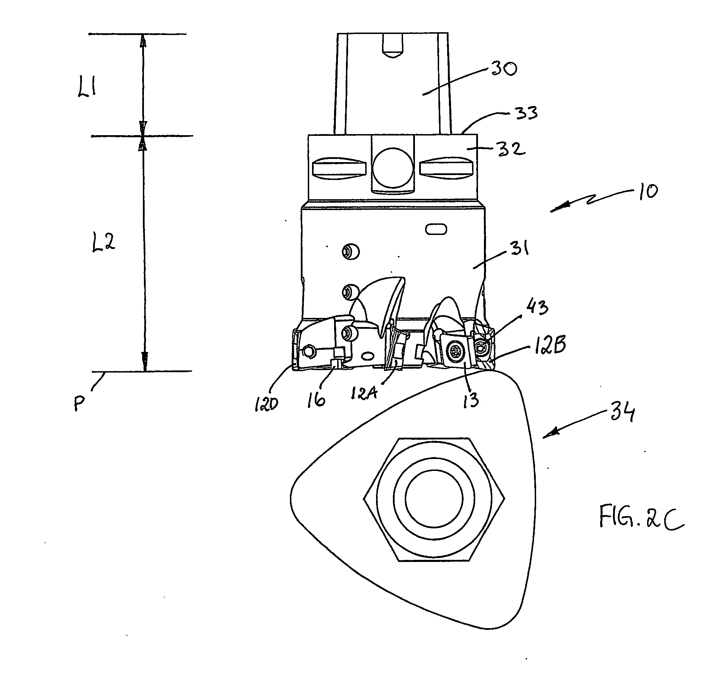

The milling inserts 12A-12D are described more closely in US-A-6,142,716 which hereby is incorporated in the present description. The cutting insert 12A comprises two, substantially parallel, longer sides and them uniting short sides as well as upper and lower sides. At least one cutting edge pair is formed at the transition between the upper side and both a long side and a short side of the cutting insert. The upper side constitutes a rake face and the long side as well as the short side constitutes clearance surfaces. Each cutting edge pair is made of a major cutting edge at the long side and a minor cutting edge at the short side, which meet at the area of a cutting corner. The cutting corner is provided inside of an imaginary extension line of the major part of the short side. The minor cutting edge is provided to generate the surface of the work piece 34 at milling. The main cutting edge slopes such that it forms an acute angle with the lower side. Each cutting edge pair connects in direction towards the lower side to a first clearance surface that protrudes relative to the plane wherein the major part of the short and long sides are in. It is understood that milling inserts and insert pockets with other geometries can be used in the tool 10. The milling inserts 12A-12D are in the holder 11 such that their most peripheral parts relative to the center axis CL of the holder substantially lies in a circle C. The circle C also constitutes the biggest or efficient diameter of the cutting tool 10. The axially foremost parts of the milling inserts 12A-12D lie in a plane P (Fig. 2C).

The second cutting inserts 13-16 for turning are provided radially inside of the circle C. The most peripheral parts of the second cutting inserts 13-16 are provided preferably radially outside of the biggest or efficient diameter C1 of the holder. The turning inserts 13-16 are provided also axially inside the plane P. The latter means that also the insert pockets for the turning inserts preferably lie axially inside of a plane parallel with the plane P.

The cutting insert 13 or 14 has four corners and has a positive geometrical basic shape. The cutting insert has a planar rake face, but may alternatively be formed with chip breakers of some sort. The tool shall not be rotated in connection with longitudinal turning or facing such as shown in for example Figs. 4 and 5A while the cutting insert 14 or 13 cuts the work piece 34. The threading insert 15 is triangular and has at least one cutting corner provided with a cutting edge for threading, for example such as is described in US-A-6,138,540 (Fig. 7). The grooving insert 16 has a rectangular shape with at least one projecting portion in order to cut a groove 35 in the work piece 34 (Fig. 6).

During all turning the milling inserts have positions that means avoiding contact with the work piece 34. The first cutting inserts 12A-12D are consequently provided for milling of the work piece during rotation of at least the cutting tool around the center axis CL and that the second cutting inserts 13-16 are provided for turning of the work piece 34 during stationary positions of the cutting tool relative to the center axis CL. In addition, the second cutting insert 13-16 is provided to be passive during milling of the work piece while the first cutting inserts 12A-12D are provided to be passive during turning of the work piece.

The cutting inserts 36A, 36B and 36C are provided in their insert pockets 38 provided around a central hole 37 in the cutting tool 10 for external threading of rods. The threading insert 36 is described more closely in WO0100362 which is hereby incorporated in the present description as regards the cutting insert. The cutting insert 36 has a generally parallel epipedical basic shape and has a chip removing part as well as a securing portion. The thread milling insert 36 is preferably made from cemented carbide. The chip removing part is equipped with two cutting edges, each of which consisting of a number of teeth. This enables the threading insert 36 to be indexable, i.e. both cutting edges can be utilized in the cutting tool 10 according to the present invention. A positive rake face is formed on the cutting insert inside of and in connection with the respective cutting edge. From Figs. 1A-1C is apparent that each threading insert 36A, 36B, 36C is secured in an elongated cutting insert pocket 38 in the tool 10 by three screws in threaded bores 39, which screws cooperate partly with recesses in each cutting insert and partly with the bores 39 in the head 31. The screws 38 are controlled radially from the outside with a key, not shown. The cutting inserts 36 are intended to mill during circular interpolation. The axially foremost parts of the cutting inserts 36 are provided axially inside of the plane P. The cutting inserts 36 are provided radially inside of the circles C and C1.

In the present state of the art numerical controlled lathes with milling spindles the tool may work rotating as well as in stationary while having a very high positioning accuracy. With a tool according to the present invention with the multifunctional machining properties more machining operations can be performed with a minimum of "chip to chip" time. The tool functions in principle as a tool revolver with the difference that it all the time sits in the active working spindle and the time for changing tools can thereby almost entirely be eliminated. The tool can turn, mill, thread, drill, ream, form etc. depending on design. In addition to productivity increases the tool a cheap way to provide the machine with a greater number of cutting inserts at for example unmanned operation.

The advantage with the tool is that the cutting inserts are positioned in such a way that milling, turn-milling, shape-milling, reaming and longitudinal turning, facing, shape turning, chamfering and threading can be performed with one and the same tool only depending on the positioning and motion of the working spindle.

The tool can likewise have the shape of a grooving milling cutter or a disc-milling cutter.

## Claims

1. Cutting tool for chip removing machining, said cutting tool (10) comprising a holder (11) and at least two first cutting inserts (12A-12D), said holder (11) comprising a number of insert pockets (17) for receiving the cutting inserts (12A-12D), said cutting inserts are mounted in the holder (11) such that their most peripheral parts relative to a center axis (CL) of the holder lie substantially in a circle (C), said circle (C) constituting a diameter of the cutting tool (10), **characterized in that** the cutting tool (10) in addition comprises at least one second cutting insert (13-16,36) provided for another machining than the first cutting inserts, said second cutting insert being provided radially inside the circle (C), **in that** the second cutting insert (13-16,36) is provided to be passive during machining of a work piece by the first cutting inserts (12A-12D) and **in that** the holder (11) comprises a fastening means with a shank (30) which connects to a head (31) via an intermediate portion (32), said intermediate portion having a planar end surface (33) in the central part of which the shank (30) projects.

2. The cutting tool according to claim 1, **characterized in that** the second cutting insert (13-16,36) is provided to be passive during milling of a work piece by the first cutting inserts (12A-12D) and **in that** the first cutting inserts (12A-12D) are provided to be passive during turning or milling of a work piece by the second cutting insert (13-16,36).

3. The cutting tool according to claim 2, **characterized in that** the second cutting insert (13-16,36) has a geometry adapted for longitudinal turning, grooving, thread turning, copy turning, facing, internal machining or thread milling.

4. The cutting tool according to claim 2, **characterized in that** at least one of the first cutting inserts (12C) and the second cutting insert (14) connect to a common chip space (25C,27) in the holder (11).

5. The cutting tool according to claim 1, **characterized in that** the first cutting inserts (12A-12D) are provided for milling of a work piece during rotation of at least the cutting tool around the center axis (CL) and **in that** the second cutting insert (13-16,36) is provided for turning of a work piece during stationary position of the cutting tool relative to the center axis (CL) or provided for milling of a stationary work piece.

6. The cutting tool according to claim 1, **characterized in that** cutting inserts (36A-36C) for thread milling are provided around a central hole (37) in the cutting tool (10) for external machining of rods.

7. Holder for a cutting tool for chip removing machining, said holder (11) comprising a number of first insert pockets (17) in order to receive at least two first cutting inserts, said insert pockets being provided in the holder (11) such that their most peripheral parts relative to a center axis (CL) of the holder lie substantially in a circle (C1), said circle (C1) constituting a diameter of the holder (11), **characterized in that** the holder (11) in addition comprises at least one second insert pocket (18-21,38) provided to receive a second cutting insert for another machining than the first cutting inserts, said second insert pocket (18-21,38) being provided radially inside of the circle (C1), **in that** the second cutting insert (13-16,36) is provided to be passive during machining of a work piece by the first cutting inserts (12A-12D) and **in that** the holder (11) comprises a fastening means with a shank (30) which connects to a head (31) via an intermediate portion (32), said intermediate portion having a planar end surface (33) in the central part of which the shank (30) projects.

8. The holder according to claim 7, **characterized in that** the first insert pockets (17) are intended to receive milling inserts (12A-12D) and **in that** the second insert pocket (18-21,38) is intended to receive a turning insert (13-16) or a milling insert (36A-36C).

9. The holder according to claim 8, **characterized in that** at least one of the first insert pockets (17C) and a second insert pocket (19) connect to a common chip space (25C,27) in the holder.

10. The holder according to claim 7, **characterized in that** at least one second insert pocket (38) for a thread milling insert (36) is provided around a central hole (37) in the holder (11).

## Patentansprüche

1. Schneidwerkzeug für die spanabhebende Bearbeitung, wobei das Schneidwerkzeug (10) einen Halter (11) und zumindest zwei erste Schneideinsätze (12A-12D) aufweist, wobei der Halter (11) eine Anzahl von Einsatztaschen (17) für die Aufnahme der Schneideinsätze (12A-12D) aufweist und die Schneideinsätze in dem Halter (11) derart montiert sind, dass ihre relativ zu einer zentralen Achse (CL) des Halters am weitesten am Umfang gelegenen Teile im Wesentlichen auf einem Kreis (C) liegen, wobei der Kreis (C) einen Durchmesser des Schneidwerkzeugs (10) definiert,
**dadurch gekennzeichnet, dass** das Schneidwerkzeug (10) zusätzlich zumindest einen zweiten Schneideinsatz (13-16, 36) aufweist, der für eine andere Bearbeitung als die ersten Schneideinsätze vorgesehen ist, wobei der zweite Schneideinsatz radial innerhalb des Kreises (C) vorgesehen ist, dass der zweite Schneideinsatz (13-16, 36) so vorgesehen ist, dass er während der Bearbeitung eines Werkstückes durch die ersten Schneideinsätze (12a-12d) passiv ist, und dass der Halter (11) eine Befestigungseinrichtung mit einem Schaft (30) aufweist, der über einen Zwischenabschnitt (32) eine Verbindung zu einem Kopf (31) herstellt, wobei der Zwischenabschnitt eine ebene Stirnfläche (33) in den zentralen Abschnitt hat, von welchem der Schaft (30) vorsteht.

2. Schneidwerkzeug nach Anspruch 1, **dadurch gekennzeichnet, dass** der zweite Schneideinsatz (13-16, 36) dafür vorgesehen ist, während des Fräsens eines Werkstückes durch die ersten Schneideinsätze (12a-12d) passiv zu sein, und dass die ersten Schneideinsätze (12a-12d) dafür vorgesehen sind, während des Drehens oder Fräsens eines Werkstückes durch den zweiten Schneideinsatz (13-16, 36) passiv zu sein.

3. Schneidwerkzeug nach Anspruch 2, **dadurch gekennzeichnet, dass** der zweite Schneideinsatz (13-16, 36) eine Geometrie hat, in die für ein Längsdrehen, Nuten, Gewindedrehen, Kopierdrehen, Planfräsen, Innendrehen oder Gewindefräsen ausgelegt ist.

4. Schneidwerkzeug nach Anspruch 2, **dadurch gekennzeichnet, dass** zumindest einer der ersten Schneideinsätze (C) und der zweite Schneideinsatz (14) an einen gemeinsamen Spanraum (25C, 27) in dem Halter (11) anschließen.

5. Schneidwerkzeug nach Anspruch 1, **dadurch gekennzeichnet, dass** die ersten Schneideinsätze (12a-12d) für das Fräsen eines Werkstückes während einer Drehung zumindest des Schneidwerkzeuges um die zentrale Achse (CL) vorgesehen sind, und dass der zweite Schneideinsatz (13-16, 36) für das Drehen eines Werkstückes während einer stationären Anordnung des Schneidwerkzeuges relativ zu der Zentralachse (CL) oder für ein Fräsen eines stationären Werkstückes vorgesehen ist.

6. Schneidwerkzeug nach Anspruch 1, **dadurch gekennzeichnet, dass** die Schneideinsätze (36a-36c) für ein Gewindefräsen um eine zentrale Bohrung (37) in dem Schneidwerkzeug (10) herum für die Außenbearbeitung von Stangen vorgesehen sind.

7. Halter für ein Schneidwerkzeug für die spanabhebende Bearbeitung, wobei der Halter (11) eine Anzahl erster Einsatztaschen (17) aufweist, um zumindest zwei erste Schneideinsätze aufzunehmen, wobei die Einsatztaschen in dem Halter (11) derart vorgesehen sind, dass ihre relativ zu einer zentralen Achse (CL) des Halters am weitesten am Umfang gelegenen Teile im Wesentlichen auf einem Kreis (C1) liegen, wobei der Kreis (C1) einen Durchmesser des Haltes (11) bildet,
**dadurch gekennzeichnet, dass** der Halter (11) zusätzlich zumindest eine zweite Einsatztasche (18-21, 38) aufweist, die dafür vorgesehen ist, einen zweiten Schneideinsatz für eine andere Bearbeitung als durch die ersten Schneideinsätze aufzunehmen, wobei die zweite Einsatztasche (18-21, 38) radial innerhalb des Kreises (C1) vorgesehen ist, dass der zweite Schneideinsatz (13-16, 36) dafür vorgesehen ist, während einer Bearbeitung eines Werkstückes durch die ersten Schneideinsätze (12a-12d) passiv zu sein, und dass der Halter (11) eine Befestigungseinrichtung mit einem Schaft (30) aufweist, der über einen Zwischenabschnitt (32) an einen Kopf (31) anschließt, wobei der Zwischenabschnitt eine ebene Stirnfläche (33) hat, in deren zentralen Teil der Schaft (30) hervorsteht.

8. Halter nach Anspruch 7, **dadurch gekennzeichnet, dass** die ersten Einsatztaschen (17) dafür vorgesehen sind, Fräseinsätze (12A-12D) aufzunehmen und dass die zweite Einsatztasche (18-21, 38) dafür vorgesehen ist, einen Dreheinsatz (13-16) und einen Fräseinsatz (36A-36C) aufzunehmen.

9. Halter nach Anspruch 8, **dadurch gekennzeichnet, dass** zumindest eine der ersten Einsatztaschen (17c) und eine zweite Einsatztasche (19) an einen gemeinsamen Spanraum (25C, 27) in dem Halter anschließen.

10. Halter nach Anspruch 7, **dadurch gekennzeichnet, dass** zumindest eine zweite Einsatztasche (38) für einen Gewindefräseinsatz (36) am Umfang einer zentralen Bohrung (37) in dem Halter (11) vorgesehen ist.

## Revendications

1. Outil de coupe pour usinage par enlèvement de copeaux, ledit outil de coupe (10) comprenant un support (11) et au moins deux premiers inserts de coupe (12A-12D), ledit support (11) comprenant un nombre de logements (17) d'insert pour la réception des inserts de coupe (12A-12D), lesdits inserts de coupe sont montés dans le support (11) de sorte que leurs parties les plus périphériques par rapport à un axe central (CL) du support sont disposées sensiblement en un cercle (C), ledit cercle (C) constituant un diamètre de l'outil de coupe (10),
**caractérisé en ce que** l'outil de coupe (10) comprend en outre au moins un deuxième insert de coupe (13-16, 36) prévu pour un autre usinage que les premiers inserts de coupe, ledit deuxième insert de coupe étant prévu radialement à l'intérieur du cercle (C), **en ce que** le deuxième insert de coupe (13-16, 36) est prévu pour être passif lors de l'usinage d'une pièce à travailler par les premiers inserts de coupe (12A-12D) et **en ce que** le support (11) comprend des moyens de fixation avec une tige (30), qui se relie à une tête (31) via une portion intermédiaire (32), ladite portion intermédiaire ayant une surface d'extrémité plane (33) dans la partie centrale de laquelle la tige (30) se projette.

2. L'outil de coupe selon la revendication 1, **caractérisé en ce que** le deuxième insert de coupe (13-16, 36) est prévu pour être passif lors du fraisage d'une pièce à travailler par les premiers inserts de coupe (12A-12D) et **en ce que** les premiers inserts de coupe (12A-12D) sont prévus pour être passifs lors du tournage ou du fraisage d'une pièce à travailler par le deuxième insert de coupe (13-16, 36).

3. L'outil de coupe selon la revendication 2, **caractérisé en ce que** le deuxième insert de coupe (13-16, 36) a une géométrie adaptée pour le tournage longitudinal, le rainurage, le filetage au tour, le tournage par copiage, le surfaçage, l'usinage interne ou le filetage à la fraise.

4. L'outil de coupe selon la revendication 2, **caractérisé en ce qu'**au moins un des premiers inserts de coupe (12C) et le deuxième insert de coupe (14) se relient à un passage commun de copeaux (25C, 27) dans le support (11).

5. L'outil de coupe selon la revendication 1, **caractérisé en ce que** les premiers inserts de coupe (12A-12D) sont prévus pour le fraisage d'une pièce à travailler lors de la rotation d'au moins l'outil de coupe autour de l'axe central (CL) et **en ce que** le deuxième insert de coupe (13-16, 36) est prévu pour le tournage d'une pièce à travailler lors d'une position stationnaire de l'outil de coupe par rapport à l'axe central (CL) ou prévu pour le fraisage d'une pièce à travailler stationnaire.

6. L'outil de coupe selon la revendication 1, **caractérisé en ce que** les inserts de coupe (36A-36C) pour le filetage par fraisage sont prévus autour d'un trou central (37) dans l'outil de coupe (10) pour l'usinage externe de barres.

7. Support pour un outil de coupe pour usinage par enlèvement de copeaux, ledit support (11) comprenant un nombre de premiers logements (17) d'insert afin de recevoir au moins deux premiers inserts de coupe, lesdits logements d'insert étant prévus dans le support (11) de sorte que leurs parties les plus périphériques par rapport à l'axe central (CL) du support sont disposées sensiblement en un cercle (C1), ledit cercle (C1) constituant un diamètre du support (11),
**caractérisé en ce que** le support (11) comprend en outre au moins un deuxième logement (18-21, 38) d'insert prévu pour recevoir un deuxième insert de coupe pour un autre usinage que les premiers inserts de coupe, ledit deuxième logement (18-21, 38) d'insert étant prévu radialement à l'intérieur du cercle (C1), **en ce que** le deuxième insert de coupe (13-16, 36) est prévu pour être passif lors de l'usinage d'une pièce à travailler par les premiers inserts de coupe (12A-12D) et **en ce que** le support (11) comprend un moyen de fixation avec une tige (30), qui se relie à une tête (31) via une portion intermédiaire (32), ladite portion intermédiaire ayant une surface d'extrémité plane (33) dans la partie centrale de laquelle la tige (30) se projette.

8. Le support selon la revendication 7, **caractérisé en ce que** les premiers logements d'insert (17) sont destinés à recevoir des inserts de fraisage (12A-12D) et **en ce que** le deuxième logement (18-21, 38) d'insert est destiné à recevoir un insert de tournage (13-16) ou un insert de fraisage (36A-36C).

9. Le support selon la revendication 8, **caractérisé en ce qu'**au moins un des logements d'insert (17C) et un deuxième logement d'insert (19) se relient à un passage commun de copeaux (25C, 27) dans le support.

10. Le support selon la revendication 7, **caractérisé en ce que** au moins un deuxième logement d'insert (38) pour un insert de filetage par fraisage (36) est prévu autour d'un trou central (37) dans le support (11).
